# EUROPEAN PATENT SPECIFICATION

(11) **EP 3 476 480 B1**
(45) Date of publication and mention of the grant of the patent: **28.08.2024**
(21) Application number: 17815483.7
(22) Date of filing: 22.06.2017
(51) Int. Cl.: B01J 29/74, B01J 23/63, B01J 23/44, B01J 23/42, B01J 20/18, B01J 37/02, B01J 29/70, F01N 3/10, B01D 53/94, B01J 35/56, B01J 35/61

(54) **CATALYST FOR LEAN BURN**
KATALYSATOR FÜR MAGERVERBRENNUNG
CATALYSEUR POUR MELANGE PAUVRE

(30) Priority: 23.06.2016 JP 2016124082
(43) Date of publication of application: 01.05.2019
(73) Proprietor: N.E. Chemcat Corporation, Tokyo 105-6124 (JP)
(72) Inventor: ANDO, Ryuji, Tokyo 105-6124 (JP); KAYADA, Yuto, Tokyo 105-6124 (JP)
(74) Representative: TBK
(86) International application number: PCT/JP2017/023053
(87) International publication number: WO 2017/222017

(56) References cited:
- WO-A1-2011/154913
- WO-A1-2013/151557
- WO-A1-2015/029382
- JP-A- 2010 510 884
- JP-A- 2013 139 718
- JP-A- 2013 528 119
- JP-A- 2013 537 846
- US-A1- 2011 030 346
- US-A1- 2014 271 428
- US-A1- 2015 165 422

## Description

### Technical Field

The present invention relates to catalysts for lean burn and relates to a catalyst for lean burn that is capable of purifying NOₓ sufficiently and that has a high ability to purify CO and HC a wide temperature range from low to high temperatures.

### Background Art

Lean-burn engines such as lean-burn gasoline engines or diesel engines which efficiently use a small amount of fuel have attracted attention as a solution to prevention of global warming caused by carbon dioxide (CO₂) and to effective use of resources.

For such a lean-burn engine, the amount of air introduced into the engine is larger than that according to a stoichiometric air-fuel ratio. Since the amount of air is larger than the stoichiometric amount, hydrocarbon (HC) and carbon monoxide (CO), which are reducing components, can be oxidatively removed easily by excess oxygen. However, a disadvantage is that nitrogen oxide (NOₓ), which is an oxidizing component, is difficult to reductively remove because of the environment which contains a large amount of air and is likely to lack reducing components such as HC and CO. In recent years, the amounts of HC and CO as reducing components in exhaust gas have been decreasing, particularly with increasing commercial demand for low fuel consumption, and solving the above disadvantage has become an important issue.

In the case of gasoline engines, in order to reduce pollution by nitrogen oxide (NOₓ), carbon monoxide (CO), and hydrocarbon(HC), which are toxic components contained in exhaust gas discharged and which are restricted by Air Pollution Control Act, the amounts of the three pollutants are simultaneously reduced by operating the engines under or in the vicinity of a stoichiometric air-fuel ratio (ratio of air/fuel, A/F) condition and using a three-way catalyst (TWC) provided in the exhaust pipe of the engine outlet. As for lean-burn gasoline engines or diesel engines, however, the disadvantage described above imposes the need for a catalyst or purification system adapted to preferentially purify NOₓ, which differs from conventional three-way catalysts.

Additionally, in the case of diesel engines, which use light oil, toxic components contained in exhaust gas discharged include not only the above three components but also other components such as soluble organic fraction (also referred to as SOF) and soot which are restricted by Air Pollution Control Act. Thus, an oxidation catalyst (diesel oxidation catalyst: DOC) is provided in the exhaust pipe to oxidatively remove SOF, and a soot filter (diesel particulate filter: DPF) or a catalyzed soot filter (CSF) is provided in the exhaust pipe to oxidatively remove soot.

Generally, combustion engines in which lean burn occurs are perpetually in a state where the amount of air is larger than the stoichiometric amount and hence tend to produce NOₓ itself. In addition, reductive purification of NOₓ is significantly difficult due to insufficient amounts of reductants such as HC and CO.

As a method of removing NOₓ components, a method has been investigated which uses a NOₓ storage catalyst or lean NOₓ trap (LNT) catalyst to reductively remove NOₓ on such a catalyst (see Patent Literature 1, for example).

In this LNT catalyst, unburned HC contained in exhaust gas resulting from fuel burning at a rich air-fuel ratio (where the amount of air is much smaller than the stoichiometric amount) or a fuel injected into the exhaust pipe is used as a reductant. In control of an actual vehicle, it is common practice, once the amount of stored NOₓ in the LNT has reached a certain level or a certain period of time has elapsed, to send to the catalyst a signal instructing that a reducing component such as unburned HC or a fuel such as light oil should be fed into a pipe or the engine cylinder for a very short duration of 1 to 10 seconds (this operation will be referred to as "rich spike" hereinafter). Typically, the amount of stored NOₓ in LNT at which a high efficiency is obtained is monitored to accomplish the rich spike efficiently. In some cases, the rich spike is carried out after a lapse of certain time for the purpose of protection of the engine or the catalyst.

In the LNT catalyst, an oxide of an alkaline earth metal such as barium, magnesium, calcium, or strontium, an oxide of an alkali metal such as lithium, sodium, potassium, or rubidium, or an oxide component of a rare-earth metal such as cerium, lanthanum, praseodymium, or neodymium is used as a component for adsorbing NOₓ.

In the LNT catalyst, active species based on a precious metal such as platinum, palladium, or rhodium, an oxygen storing-releasing component, sometimes referred to as "OSC" (oxygen storage component) hereinafter, such as ceria or a ceria-zirconia-based composite oxide, and a promoter component selected from inorganic oxides including zirconia, silica, titania, alumina, and zeolite are often used in addition to the NOₓ adsorbing component described above. The OSC absorbs oxygen when the oxygen concentration is high in the exhaust gas and releases oxygen when the oxygen concentration is low in the exhaust gas. The storage and release of oxygen act to reduce the change in oxygen concentration in the exhaust gas and allow adjustment of the oxygen concentration to a level suitable for purification of the exhaust gas.

As for zeolites, it has been proposed to use a zeolite, such as Y-zeolite, zeolite ZSM-5, and dealuminized mordenite, on which a platinum-group precious metal as a catalytic active component is supported, in a functional layer for hydrocarbon storage (see Patent Literature 2).

A multi-layer catalyst converter (see Patent Literature 3) has also been proposed, which includes: a first layer containing Pt for oxidizing NO into NO₂ and/or NO₃ and further containing Ba as a NOₓ storage component for storing NO₃ and releasing NO and O₂; and a Rh element-containing second layer provided on the first layer to reduce NO into N₂. It is stated that a zeolite can be used in this multi-layer catalyst converter.

The above catalyst employing a Ba component for storage of NOₓ experiences a decrease in activity during actual running of a diesel engine vehicle, especially when the catalyst is exposed to a high temperature and lean operating conditions. The catalytic activity significantly decreases, in particular, under low-temperature (200 to 350°C) operating conditions and under high-temperature (450 to 600°C) operating conditions. Further, the NOₓ adsorbing material containing a Ba component has the following disadvantage: exposure of the material to a temperature higher than 450°C in the presence of CO₂ leads to formation of barium carbonate, which is more stable than barium nitrate. Additionally, Ba tends to be sintered to form a composite compound with a support material, in consequence of which the NOₓ storage capacity is likely to be lost.

Catalysts used in recently-developed diesel vehicles are exposed to harsh high-temperature conditions where the temperature of exhaust gas is higher than 600°C. Such a trend is evident in engines of small size that are required to exhibit a high power. Such small-sized engines, which are generally mounted in passenger automobiles, are designed to attain a desired power by increase in rotational speed and therefore often generate exhaust gas having a higher temperature than that generated by conventional engines. This is also a reason why satisfactory purification performance cannot be easily obtained by conventional techniques. Naturally, the NOₓ storage capacity of Ba at high temperatures is required, while at low temperatures the NOₓ adsorption capacity of CeO₂ is needed. Further, the amount of emission of CO and HC is so large that the function of a DOC is also demanded.

In the expectation of the performance as a DOC, provision of a zeolite on the upstream side has been investigated, and a multi-layered catalyst for reduction in nitrogen oxide has been proposed, which is provided in the exhaust pipe where the exhaust gas flows (see Patent Literature 4). This literature states that nitrogen oxide contained in the exhaust gas is oxidized by the first catalyst layer, a part of the oxidized nitrogen oxide is reduced through oxidation-reduction reaction with hydrocarbon contained in an unburned fuel or the exhaust gas, and the other part of the oxidized nitrogen oxide is diffused in the second catalyst layer, and also states that the zeolite used is preferably a zeolite ion-exchanged with copper, platinum, manganese, iron, or the like.

Although the use of a zeolite has been proposed as described above, there is no description of whether problems arising in a high temperature environment can be solved by using the zeolite. No technology has been established that suppress the deterioration in purification performance at high temperatures.

Such circumstances have created a demand for a catalyst for lean burn that exhibits high performance in storage of NOₓ and oxidization of CO and HC thorough exhaust gas and that has less performance deterioration even when exposed to high temperatures.

### Citation List

### Patent Literature

Patent Literature 1: Japanese Patent Laid-Open No. 11-319564 (claim 1, [0005])
Patent Literature 2: Japanese Patent Laid-Open No. 2000-157870
Patent Literature 3: National Publication of International Patent Application No. 2002-506500
Patent Literature 4: Japanese Patent Laid-Open No. 2010-209905 ([0035])

WO 2011/154913 A1 relates to a nitrogen oxide storage catalyst comprising: a substrate; a first washcoat layer provided on the substrate, the first washcoat layer comprising a nitrogen oxide storage material, a second washcoat layer provided on the first washcoat layer, the second washcoat layer comprising a hydrocarbon trap material, wherein the hydrocarbon trap material comprises substantially no element or compound in a state in which it is capable of catalyzing selective catalytic reduction, said catalyst further comprising a nitrogen oxide conversion material which is either comprised in the second washcoat layer and/or in a washcoat layer provided between the first washcoat layer and the second washcoat layer.

WO 2013/151557 A1 relates to a lean NOx trap diesel oxidation catalyst for the treatment of exhaust gas emissions, wherein catalytic composites comprise a catalytic material on a carrier, the catalytic material comprising a first NOx trap layer that comprises a NOx sorbent and one or more precious metal components located on the carrier and a second NOx trap layer containing hydrocarbon trapping functionality located over the first NOx trap layer that comprises a NOx sorbent, one or more precious metal components, and a zeolite, for example a beta zeolite, wherein the zeolite is substantially free of framework aluminum.

### Summary of Invention

### Technical Problem

In view of the conventional problems described above, it is an object of the present invention to provide a catalyst for lean burn capable of purifying NOₓ sufficiently and having a high ability to purify CO and HC over a wide temperature range from low to high temperatures.

### Solution to Problem

As a result of intensive investigations, the present inventors have found that the above problems arising in lean-burn engines such as lean-burn gasoline engines and diesel engines which discharge large amounts of CO and HC and generate exhaust gas of high temperature can be solved by the use of a catalyst for lean burn which is intended for exhaust gas purification, the catalyst including: an integrally structured support; and a catalyst layer containing a precious metal element, provided on the integrally structured support and having at least two layers that include an upper layer and a lower layer, the upper layer containing at least a proton-substituted β-type zeolite (a proton-substituted β-type zeolite may be referred to herein as "H-BEA-type zeolite") and a ceria-based oxide supporting rhodium, the lower layer containing at least a NOₓ storage component and an inorganic oxide supporting platinum, wherein a total content of ceria-based oxides in the catalyst layer is a total of 70 g/L or more per unit volume of the integrally structured support, the NOₓ storage component in the lower layer contains an alkaline-earth metal compound and a ceria-based oxide, wherein a ceria of the ceria-based oxide has a BET specific surface area of 50 to 250 m²/g, as measured by a BET method, the content of the proton-substituted β-type zeolite is 20 to 70 g/L, per unit volume of the integrally structured support, a content of the rhodium, in terms of metallic rhodium, is 0.1 to 2.0 g/L per unit volume of the integrally structured support, a content of the platinum, in terms of metallic platinum, is 1.0 to 8.0 g/L per unit volume of the integrally structured support, and a ratio between the rhodium and the palladium in the catalyst layer, expressed by a weight ratio between the rhodium and the palladium calculated as metals, is 1:3 to 1:20. Based on this finding, the inventors have completed the present invention.

That is, a first aspect of the present invention provides a catalyst for a lean-burn engine, the catalyst being intended for purification of exhaust gas, the catalyst including an integrally structured support and a catalyst layer containing a precious metal element, provided on the integrally structured support and having at least two layers, wherein
the upper layer of the catalyst layer contains at least a proton-substituted β-type zeolite and a ceria-based oxide supporting rhodium, and the lower layer of the catalyst layer contains at least a NOₓ storage component and platinum supported on an inorganic oxide,
a total content of ceria-based oxides in the catalyst layer is a total of 70 g/L or more per unit volume of the integrally structured support,
the NOₓ storage component in the lower layer contains an alkaline-earth metal compound and a ceria-based oxide, wherein a ceria of the ceria-based oxide has a BET specific surface area of 50 to 250 m²/g, as measured by a BET method,
the content of the proton-substituted β-type zeolite is 20 to 70 g/L, per unit volume of the integrally structured support,
a content of the rhodium, in terms of metallic rhodium, is 0.1 to 2.0 g/L per unit volume of the integrally structured support,
a content of the platinum, in terms of metallic platinum, is 1.0 to 8.0 g/L per unit volume of the integrally structured support, and
a ratio between the rhodium and the palladium in the catalyst layer, expressed by a weight ratio between the rhodium and the palladium calculated as metals, is 1:3 to 1:20.

A second aspect of the present invention provides the catalyst for a lean-burn engine according to the first aspect, wherein the NOₓ storage component contains BaO and CeO₂.

A third aspect of the present invention provides the catalyst for a lean-burn engine according to any one of the first to fourth aspects, wherein the inorganic oxide of the lower layer contains alumina.

A fourth aspect of the present invention provides the catalyst for a lean-burn engine according to the fifth aspect, wherein the lower layer contains platinum and palladium.

A fifth aspect of the present invention provides the catalyst for a lean-burn engine according to any one of the first to fourth aspects, wherein the NOₓ storage component in the lower layer contains an alkaline-earth metal compound and a ceria-based oxide, wherein the ceria-based oxide is contained at a rate of 50 to 200 g/L per unit volume of the integrally structured support.

The exhaust gas may be exhaust gas discharged from a diesel vehicle.

### Advantageous Effects of Invention

The catalyst for lean burn according to the present invention has a particular composition and layer configuration, can sufficiently purify NOₓ in exhaust gas from, for example, a lean-burn engine such as a lean-burn gasoline engine or diesel engine and can exhibit high purification performance of CO and HC over a wide temperature range from low to high temperatures.

### Brief Description of Drawings

[Figure 1] Figure 1 is an illustration diagrams schematically-showing the layer configuration of a catalyst for lean burn according to an embodiment and the mechanism of exhaust gas purification by the catalyst.
[Figure 2] Figure 2 is a graph comparing the NOₓ storage performance of a catalyst for lean burn (Example 1) with that of conventional catalysts (Comparative Examples 1 and 2).
[Figure 3] Figure 3 is a graph comparing the CO oxidation performance of catalysts for lean burn (Examples 1 to 7) with that of conventional catalysts (Comparative Examples 3 to 5).
[Figure 4] Figure 4 is a graph comparing the HC oxidation performance of catalysts for lean burn (Example 1 to 7) with that of conventional catalysts (Comparative Examples 3 to 5).

### Description of Embodiments

Hereinafter, embodiments of the present invention will be described in detail with reference to the drawings. The following mainly describes the case of an automobile diesel engine as an example. However, as far as technology for purification of NOₓ generated by lean burn is concerned, the present invention is not limited to use in diesel vehicles. The present invention can exhibit high catalytic performance also when used in other applications such as gasoline vehicles. The embodiments described below are only illustrative of the present invention, and the present invention is not limited to these embodiments. In the present specification, the positional relationships specified by the terms such as upper, lower, left, and right are based on the positional relationships shown in the drawings unless otherwise noted. In the present specification, a numerical range such as that expressed by "1 to 100" is defined as including both the upper limit "100" and the lower limit "1", and the same applies to other numerical ranges. The dimensional ratio shown in the drawings is not limited to that in the drawings.

### 1 Catalyst for Lean Burn

A catalyst for lean burn according to the present embodiment has a configuration in which a catalyst layer is provided on an integrally structured support, the catalyst layer being made up of at least two layers that include an upper layer and a lower layer, the upper layer containing at least a proton-substituted β-type zeolite and a ceria-based oxide supporting rhodium as a precious metal component, the lower layer containing at least a NOₓ storage component and platinum supported on an inorganic oxide.

Conventional catalysts employ a type of zeolite such as A-type, X-type, Y-type, MFI-type (ZSM-5), MOR-type, or CHA-type zeolite and have insufficient purification performance at high temperatures. To overcome this disadvantage, the catalyst of the present embodiment includes a proton-substituted β-type zeolite as an essential component.

That is, the present embodiment uses a proton-substituted β-type zeolite resulting from ion exchange with hydrogen of cations such as those of an alkali (alkaline-earth) metal element which are present inside the pores of the zeolite. By virtue of the large pores of the proton-substituted β-type zeolite, the use of this zeolite can provide high performance in trapping of HC having a high boiling point and a long carbon chain, yield an increased reactivity of hydrocarbon, provide an enhanced suppressing effect on the hydrocarbon poisoning at the time of addition of light oil at low temperatures, and allow high catalytic activity to be maintained for a long period of time. Being of the proton-substituted β-type, this zeolite is less prone to cause undesired oxidation reaction at low activity than zeolites ion-exchanged with iron, copper, or the like; thus, this zeolite is less likely to be deactivated due to coking of HC components caused by incomplete oxidation, and exhibits significantly high performance at high temperatures.

The catalyst for lean burn according to the present embodiment includes a precious metal element-containing catalyst layer (catalyst composition) provided on an integrally structured support (honeycomb structure) and made up of at least two layers including an upper layer and a lower layer. A rhodium (Rh) component, a platinum (Pt) component, and a palladium (Pd) component are used as the precious metal active species for enabling reductive purification of NOₓ by reducing components such as HC and CO. In particular, a rhodium (Rh) component has high NOₓ-reducing ability. Thus, in the catalyst for lean burn according to the present embodiment, reductive purification of NOₓ is accomplished mainly by a rhodium component.

### 2 Layer Configuration of Catalyst for Lean Burn

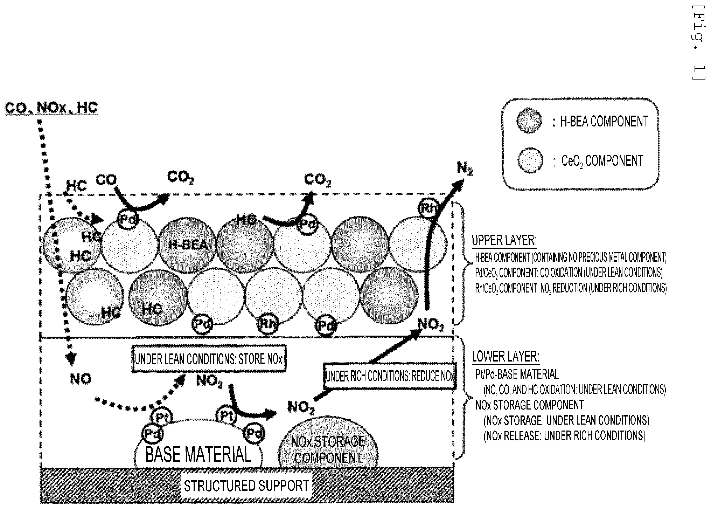

As shown in Figure 1, the catalyst for lean burn according to the present embodiment has a precious metal element-containing catalyst layer on an integrally structured support, the catalyst layer being made up of at least two layers including at least an upper layer and a lower layer.

In the present embodiment, the upper layer contains a proton-substituted β-type zeolite and a ceria-based oxide supporting rhodium, and the lower layer contains a NOₓ storage component and platinum supported on an inorganic oxide (base material). In the upper layer, a ceria-based oxide supporting palladium is also used. The platinum-supporting inorganic oxide in the lower layer may further support palladium and be a platinum-palladium-supporting inorganic oxide. Hereinafter, a ceria-based oxide is sometimes referred to as "ceria (CeC₂)" if appropriate.

The catalyst for lean burn according to the present embodiment has minimum catalyst composition constituents i.e. the upper layer and lower layer. Such a layer configuration is preferred both in terms of operation efficiency and in terms of cost. However, as long as the above object of the present invention is achieved, another layer may be provided in addition to the two upper and lower layers to form a three-layer configuration consisting of the upper, lower, and lowermost layers, or a binder layer, a suppressing layer for suppressing transition of the catalyst components, a phosphorus- or sulfur-trapping or barrier layer, or a different catalyst composition layer may be provided as appropriate between the honeycomb structure and the lower layer, between the lower layer and the upper layer, or on top of the upper layer. That is, in the catalyst for lean burn according to the present embodiment, any additional layer may be interposed between the honeycomb structure and the lower layer or between the lower layer and the upper layer and may be disposed on top of the upper layer, as long as the lower layer and the upper layer are arranged in this order on the honeycomb structure as shown in the figure.

The upper layer and lower layer of the present embodiment can contain different types of zeolites such as A-type, X-type, Y-type, MFI-type (ZSM-5), MOR-type, and CHA-type zeolites, in addition to the minimum catalyst composition constituents described above, as long as the action of the minimum catalyst composition constituents is not impaired. Not only these zeolites but also transition metals such as platinum, silver, copper, nickel, tungsten, vanadium, zirconium, titanium, and tungsten, rare-earth metals such as cerium, lanthanum, and neodymium, alkali metals, alkaline-earth metals such as barium and calcium, silicon, and the like can be used by themselves or as oxides or composite oxides in addition to the minimum catalyst composition constituents, as long as the action of the minimum catalyst composition constituents is not impaired.

If the lower layer is divided into two layers, the lowermost layer does not need to contain any zeolite, and this is advantageous in terms of the cost required to implement the present invention. However, the lowermost layer may contain a variety of zeolites as mentioned above in addition to the minimum catalyst composition constituents as long as the action of the minimum catalyst composition constituents is not impaired.

### A Upper Layer

In the catalyst for lean burn according to the present embodiment, the upper layer contains at least a proton-substituted β-type zeolite and a ceria-based oxide supporting rhodium. The amounts of the catalyst components in the following description about the upper layer are the amounts of the components contained in the upper layer, unless otherwise specified.

### (1) Proton-Substituted β-type Zeolite

In the present embodiment, the proton-substituted β-type zeolite is used in the upper layer when the catalyst layer is in the form of a two-layer catalyst and in the uppermost layer when the catalyst layer is in the form of a three-layer catalyst.

In the present embodiment, the presence of the proton-substituted β-zeolite in the upper layer increases the ability to adsorb hydrocarbon, enhances the suppressing effect on the hydrocarbon poisoning at the time of addition of light oil at low temperatures, and allows the stability and catalytic activity to be maintained at high temperatures for a long period of time.

The proton-substituted β-type zeolite has a unit cell composition represented by the following average composition formula and is classified as a tetragonal synthetic zeolite.

M_{m/x}[AlₘSi₍₆₄₋ₘ₎O₁₂₈]·pH₂O

(In the formula, M is a cation species, x is a valence of the M, m is a number more than 0 and less than 64, and p is a number equal to or more than 0.)

The proton-substituted β-type zeolite typically has a relatively complex three-dimensional porous structure composed of straight pores having a relatively large size and arranged in one direction and curved pores intersecting the straight pores, and has a property such as easy diffusion of hydrocarbon gas molecules. While mordenite, faujasite, or the like has only straight pores arranged in one direction, the proton-substituted β-type zeolite has a distinctive structure which is a complex three-dimensional structure as described above. Such a proton-substituted β-type zeolite is less susceptible to heat-induced structural destruction and more stable. Additionally, as described above, the proton-substituted β-type zeolite, being of the proton-substituted β-type, is less likely to cause coking and has higher performance at high temperatures than zeolites ion-exchanged with metal elements such as iron and copper.

In the present embodiment, an example where the proton-substituted β-type zeolite containing no precious metal or transition metal is used has been described. However, in addition to this zeolite, for example, an Fe-BEA-type zeolite ion-exchanged with an iron element may be contained as long as the intended object of the present invention is not impaired. The iron element may be iron oxide. The proton-substituted β-type zeolite exhibits a higher HC adsorption-desorption rate than the iron element-containing zeolite and is therefore preferably contained as a main component. The "main component" refers to a zeolite accounting for 80 wt% or more, preferably 90 wt% or more, more preferably 95 wt% or more, of the total amount of zeolites used in the catalyst layer (catalyst composition) provided on the integrally structured support.

Generally, in zeolites, cations serving as solid acid sites are present as counterions. Examples of the cations include ammonium ions. In the present embodiment, a proton-substituted β-type zeolite resulting mainly from substitution with proton is preferably used. The degree of proton substitution (%) in the zeolite is preferably represented by the following equation (1) on the basis of the fact that one H element (ion) and two [AlO_{4/2}]⁻ units above as monovalent ion-exchange sites in the zeolite form together an ion pair. [Degree of proton substitution (%)] = [Number of moles of H ions introduced by proton substitution per unit weight of zeolite]/{(Number of moles of Al2O3 present per unit weight of zeolite) × (1/2)}] × 100

The substitution ratio is preferably 15 to 100%, more preferably 15 to 95%, and even more preferably 15 to 80%. When the ion exchange ratio is 95% or less, more preferably 80% or less, high denitration performance tends to be achieved. The reason why high denitration performance can be achieved has not yet been clarified; however, it is hypothesized that the skeleton structure of the zeolite is more stabilized and that this stabilization provides improvement in heat resistance of the catalyst and hence in durability of the catalyst, thereby allowing a more stable catalytic activity to be obtained. However, if the substitution ratio is less than 15%, sufficient denitration performance cannot be obtained in some cases.

As described thus far, the use of β-zeolite substituted with proton improves high-temperature characteristics and low-temperature characteristics of a denitration reaction involving hydrocarbon-based reductants, thus providing a high ability to purify nitrogen oxide in exhaust gas.

The present embodiment does not exclude the use of different types of zeolites such as A-type, X-type, Y-type, MFI-type (ZSM-5), MOR-type, and CHA-type zeolites. However, if these zeolites are contained in large amounts, the amount of the proton-substituted β-type zeolite is relatively decreased, which tends to lead to failure to obtain the remarkable effect of the present invention.

From the above viewpoint, the content of the proton-substituted β-type zeolite is 20 to 70 g/L, and preferably 35 to 60 g/L per unit volume of the integrally structured support. The proton-substituted β-type zeolite has the ability to adsorb and store HC at low temperatures where precious metals do not act to oxidatively purification of HC, and exerts the function of releasing the adsorbed and stored HC at high temperatures. Thus, the proton-substituted β-type zeolite is very effective means for, at start-up of the engine, introducing HC contained in insufficiently heated exhaust gas into the catalyst without directly discharging the HC to the outside of the system.

If the amount of the proton-substituted β-type zeolite is excessively small, sometimes adsorption and storage of HC at low temperatures is insufficient so that HC is discharged to the outside of the system. If the amount of the proton-substituted β-type zeolite is excessively large, sometimes the catalyst layer on the integrally structured support (honeycomb) is thick to thereby narrow the through hole cross-section of the honeycomb and cause a back pressure increase which, in the case of use in an internal combustion engine, sometimes leads to a decrease in output of the internal combustion engine.

### (2) Precious Metal Components

A rhodium component is supported on a ceria-based oxide. The rhodium component may be present in the form of metallic rhodium or may be in part contained as rhodium oxide resulting from oxidation during baking in a production process as described below or during exhaust gas purification.

Rhodium is a highly active species, and thus even a small amount of rhodium can, if having a small particle diameter and being well dispersed, exhibit high activity. However, the reserve of rhodium is small, and rhodium is expensive, so that it is desired for rhodium to maintain a well-dispersed state. In the present embodiment, therefore, the rhodium component is used in the upper layer to be directly exposed to NOₓ and reactive HC components.

The amount of the rhodium component, calculated as metallic rhodium, is 0.1 to 2.0 g/L and more preferably 0.2 to 1.5 g/L per unit volume of the integrally structured support.

If the amount of the rhodium component is excessively large, rhodium particles on the base material may become large during preparation, or the distance between the rhodium particles on the base material may be so short that particle growth tends to occur at high temperatures due to relative movement between the rhodium particles. In some cases, this causes a decrease in surface area per unit weight, leading to failure to sufficiently exhibit the NOₓ purifying action. On the contrary, if the amount of the rhodium component is excessively small, in some cases the absolute value of the surface area of rhodium is so small that the NOₓ purifying action is not sufficiently exhibited in some cases.

If needed, the upper layer can contain a ceria-based oxide supporting palladium. In some cases it is preferable for the upper layer to contain a ceria-based oxide supporting palladium, because in this case CO can sometimes be burnt at lower temperatures or in the early stage. Palladium may be in the form of a metal or may be present as an alloy with platinum. It is also possible that palladium is present initially in the form of metallic palladium and is oxidized in part to form an oxide during baking in the production process as described below or during exhaust gas purification. When palladium is in the form of an alloy with platinum, volatilization of a platinum component at high temperatures can be suppressed in some cases.

The amount of the palladium component is not particularly limited. The amount of the palladium component, calculated as metallic palladium, is preferably 0.1 to 2.0 g/L and preferably 0.2 to 1.5 g/L per unit volume of the integrally structured support. If the amount of the palladium component is excessively large, in some cases O₂-induced reaction for oxidatively purifying HC and CO which are reductants takes place to an excessive extent and consumes HC and CO required for reductive removal of NOₓ.If the amount of the palladium component is excessively small, the oxidatively purifying action of O₂ on HC and CO, which are toxic components, is not sufficiently exhibited in some cases.

If needed, the upper layer can contain an inorganic oxide supporting platinum. Examples of the inorganic oxide supporting platinum include, but are not particularly limited to, platinum-supporting alumina and platinum-palladium-supporting alumina. In some cases it is preferable to incorporate a platinum-supporting inorganic oxide, because in this case CO can sometimes be burnt at lower temperatures or in the early stage. Platinum may be in the form of a metal or can be present as an alloy with palladium. It is also possible that platinum is present initially in the form of metallic platinum and is oxidized in part to form an oxide during baking in the production process as described below or during exhaust gas purification. When platinum is in the form of an alloy with palladium, volatilization of the platinum component at high temperatures can be suppressed in some cases.

The amount of the platinum component, calculated as metallic platinum, can be 0.05 to 5 g/L per unit volume of the honeycomb structure.

The ratio between the rhodium component and the palladium component, in view of actual denitration performance, expressed by a weight ratio between the components calculated as metals, is 1:3 to 1:20. The ratio between the rhodium component and the total of the platinum and palladium components is preferably 1:5 to 1:15. The catalyst for lean burn according to the present embodiment is intended to purify NOₓ by the working of the two precious metal components, the rhodium component and platinum component, and if needed, exhibits increased NOₓ removal performance by the working of three precious metal components including the rhodium and platinum components plus the palladium component. When the composition of the catalyst falls within the range as described above, the catalyst can exhibit high NOₓ removal performance.

### (3) Ceria-based Oxide

In the present embodiment, the precious metal components such as the rhodium component, palladium component, and platinum component are each supported on a heat-resistant inorganic oxide. The activity of these precious metal components largely depends on their surface area, and it is desirable for the precious metal components to be stably dispersed as fine particles in the catalyst composition. Thus, in order for these precious metal components to stably maintain a well-dispersed state even at high temperatures, each precious metal component is preferably supported on a ceria-based oxide or alumina having a large surface area.

HC and CO in exhaust gas can be oxidized by palladium or platinum. However, oxidation of HC and CO is less likely to occur at a lower oxygen concentration. In such a case, oxygen supplied from an oxygen storing-releasing material (OSC) works to oxidatively purify HC and CO in place of oxygen contained in the exhaust gas and promote the exhaust gas purification. This action can be considered an oxidation-reduction reaction, and the use of an OSC capable of supplying and storing oxygen at a high rate allows a catalyst having a high ability to oxidatively remove HC and CO to be easily obtained.

Typical OSCs capable of storing and releasing oxygen at a high rate include ceria and a composite oxide (CZ) of ceria and zirconia. Ceria is best suited because it is capable of storing and releasing oxygen at a higher rate. The composite oxide of ceria and zirconia has a crystal structure that is heat-stable and redox-stable and, with the use of the composite oxide, the working of ceria is not inhibited, and even the inner portions of the particles can be used to work as an OSC.

In the present embodiment, the ceria-based oxide is an oxide containing cerium as a main component and may further contain zirconia. For example, ceria (CeO₂) functions as an OSC, CeO₂ is converted to Ce₂O₃ upon release of oxygen, and Ce₂O₃ is converted to CeO₂ upon storage of oxygen.

It is preferable that the ceria used should have high heat resistance and, in order to allow the active species to remain well-dispersed for a long period of use, have a large specific surface area. The BET specific surface area of the ceria, as measured by a BET method, is preferably 20 to 250 m²/g, more preferably 30 to 200 m²/g, and even more preferably 50 to 170 m²/g.

It is also possible to use a ceria-zirconia-based composite oxide in which the amount of the cerium component is larger than the amount of the zirconium component. In such a case, the ceria-based composite oxide may contain 2 to 20 wt% of lanthanum oxide and 2 to 20 wt% of neodymium oxide in order, for example, to improve the heat resistance. For the purpose of improving the heat resistance, an additive such as calcium oxide, ceria, zirconia, magnesium oxide, or yttrium oxide may be added, and lanthanum oxide, neodymium oxide, and the like may also be added.

The use of a ceria-based oxide as a base material for supporting rhodium can promote NOₓ reduction during rich spike.

The content of the ceria-based oxide in the upper layer is not particularly limited but is preferably 20 to 150 g/L and more preferably 30 to 120 g/L per unit volume of the integrally structured support.

If the amount of the ceria-based oxide is excessively small, sometimes the distance between the supported precious metal particles such as rhodium particles is so small that the particles are poorly dispersed to have a reduced activity, or the rhodium particles are sintered together to have an increased particle diameter and hence present a decreased rhodium surface area leading to a reduced activity. If the amount of the ceria-based oxide is excessively large, sometimes the catalyst layer on the integrally structured support is thick to thereby narrow the through hole cross-section of the honeycomb and cause a back pressure increase which, in the case of use in an internal combustion engine, leads to a decrease in output of the internal combustion engine.

### B Lower Layer

In the catalyst for lean burn according to the present embodiment, the lower layer contains at least a NOₓ storage component and platinum supported on an inorganic oxide. The NOₓ storage component includes an alkaline-earth metal compound and a ceria-based oxide. The amounts of the catalyst components in the following description about the lower layer are the amounts of the components contained in the lower layer, unless otherwise specified.

### (1) Alkaline-Earth Metal

The catalyst for lean burn according to the present embodiment contains a NOₓ storage component. An alkaline-earth metal compound is suitable for use as the NOₓ storage component. Examples of the alkaline-earth metal element include Be, Mg, Ca, Sr, Ba, and Ra, among which Ba and Mg are preferred and Ba is more preferred. The lower layer can contain, for example, only a Ba component or a combination of Ba and Mg components as the NOₓ storage component.

The NOₓ storage component, as typified by a Ba component, has the function of adsorbing NOₓ contained in exhaust gas. When, for example, Ba acetate is used as a raw material , the subsequent baking will convert Ba acetate to BaO. BaO reacts with CO₂ (approximately 4 to 8%) contained in exhaust gas to give BaCO₃. Once the NOₓ concentration in the exhaust gas has become high, BaCO₃ reacts with NOₓ to give Ba(NO₃)₂. Such a reaction with NOₓ is referred to as NOₓ adsorption or NOₓ storage.

Generally, NOₓ is produced in a large amount when the amount of the fuel supplied to the engine is small relative to the amount of air. The Ba component is intended to transiently absorb the NOₓ thus produced. The NOₓ adsorbed by the Ba component is discharged from the Ba component once the NOₓ concentration has become low and the CO concentration has become high in the exhaust gas. This corresponds to the above-mentioned process in which Ba(NO₃)₂ reacts with CO to give BaCO₃.

The NOₓ released from the Ba component mainly reacts with HC or any other reducing component on the rhodium component and is reductively purified. Such NOₓ storage and release by the Ba component can be considered to be due to chemical equilibrium of the Ba component.

Under conditions where the amount of oxygen is large (lean conditions), barium carbonate as the Ba component converts NOₓ to barium nitrate, and thus NOₓ is stored in the Ba component. Under conditions where the amount of oxygen is small (rich conditions), barium nitrate is converted to barium carbonate, and thus the stored NOₓ is released. The NOₓ thus released is purified by the rhodium component of the upper layer using HC and CO serving as reductants or hydrogen produced from steam-reforming reaction.

Additionally, since barium carbonate and magnesium carbonate are both poorly soluble in water, barium or magnesium is not dissolved into an aqueous solution during slurrying (although barium sulfate is poorly soluble in water, magnesium sulfate is soluble in water, and thus magnesium is dissolved into water during slurrying).

Barium carbonate or magnesium carbonate described above can be used by itself or supported on an inorganic oxide described below such as alumina or ceria-alumina. When barium carbonate or magnesium carbonate is supported on an inorganic oxide, sometimes the synergetic effect of platinum-ceria (ceria promotes the NO oxidization activity of platinum) allows NO₂ resulting from oxidation of NO to be quickly adsorbed onto barium carbonate or magnesium carbonate, thus leading to improved performance.

Barium is preferably contained as barium oxide in an amount of 10 to 80 g/L, more preferably 20 to 70 g/L, per unit volume of the integrally structured support. If the amount of barium is below this range, NOₓ cannot be sufficiently trapped in some cases. If the amount of barium is above this range, barium is likely to be aggregated, and the aggregation may unfortunately lead to a decreased surface area for contact with NOₓ and hence deterioration in NOₓ storage performance.

If needed, magnesium can be contained as magnesium carbonate in an amount of 5 g/L to 20 g/L per unit volume of the integrally structured support.

### (2) Ceria-based Oxide

In the present embodiment, the ceria-based oxide which is contained in the lower layer is an oxide containing cerium as a main component and may further contain zirconia. For example, ceria (CeO₂) functions as an OSC, CeO₂ is converted to Ce₂O₃ upon release of oxygen, and Ce₂O₃ is converted to CeO₂ upon storage of oxygen.

The ceria which is contained in the lower layer functions not only as an OSC but also as a NOₓ adsorber and has the property of adsorbing NOₓ at lower temperatures than the Ba component. CeO₂ adsorbs (chemically adsorbs) both NO and NO₂ even at low temperatures and can retain NO in a temperature range up to around 200°C and NO₂ in a temperature range up to around 350°C. On the other hand, the Ba component also stores NOₓ; this NOₓ storage is a chemical reaction in which NO₂ is stored as a nitric acid salt, and a temperature of 250°C or higher is preferred for this reaction. The combined use of such a Ba component and ceria allows high NOₓ removal performance to be exhibited over a wide temperature range.

Preferred ceria is one that has high heat resistance and that has a large specific surface area in order to allow the active species to remain well-dispersed for a long period of use. The BET specific surface area of the ceria, as measured by a BET method, is 50 to 250 m²/g, preferably 80 to 200 m²/g, and more preferably 100 to 180 m²/g.

The ceria can be used by itself or by being supported on zirconia or alumina or forming a solid solution with zirconia or alumina. The ceria, because of its oxygen storage/release capacity, assists oxidation performance of HC and CO by palladium supported on a base material. If the amount of the ceria component is excessively large, O₂-induced reaction for oxidatively purifying HC and CO, which are reductants, may be promoted to cause lack of HC and CO required for reductive removal of NOₓ, or the ceria may be easily aggregated by heat to cause a decreased surface area. If the amount of the ceria component is excessively small, the oxidatively purifying action of O₂ on HC and CO is not sufficiently exhibited in some cases.

It is also possible to use a ceria-zirconia-based composite oxide in which the amount of the cerium component is larger than the amount of the zirconium component. In such a case, a ceria-zirconia-based composite oxide containing 2 to 20 wt% of lanthanum oxide and 10 to 30 wt% of neodymium oxide can also be used in order, for example, to improve the heat resistance. An additive such as calcium oxide, ceria, zirconia, magnesium oxide, or yttrium oxide may be further added.

The use of ceria substantially free of additives as the cerium component improves the NOₓ storage function as compared to the use of ceria containing any additive in some cases.

The content of the ceria-based oxide in the lower layer is not particularly limited, but is preferably 50 to 200 g/L and more preferably 80 to 150 g/L per unit volume of the integrally structured support.

### (3) Precious Metal Components Including Platinum

The lower layer further contains platinum supported on an inorganic oxide. Platinum may be used by itself or may be present as an alloy with palladium. It is also possible that platinum is present initially as metallic platinum and is oxidized in part to form an oxide during baking in the production process as described below or during exhaust gas purification.

The content of the platinum component in the lower layer is not particularly limited. The content of the platinum component, calculated as metallic platinum, is 1.0 to 8.0 g/L, more preferably 1.2 to 6.5 g/L, and even more preferably 1.5 to 5.5 g/L per unit volume of the integrally structured support.

The activity of the precious metal components largely depends on their surface area, and it is desirable for the precious metal components to be stably dispersed as fine particles in the catalyst composition. Thus, in order for these precious metal components to stably maintain a well-dispersed state even at high temperatures, each precious metal component is preferably supported on a heat-resistant inorganic oxide having a large surface area.

Although platinum and palladium are mentioned above as precious metal catalyst components, a transition metal, a rare-earth metal, another precious metal, or the like may be additionally used. Specifically, one or more metals can be selected as appropriate from transition metals such as iron, nickel, cobalt, zirconium, and copper, rare-earth metals such as cerium, lanthanum, praseodymium, and neodymium, and precious metals such as gold, silver, and iridium.

The platinum component or palladium component may be in the form of a metal or may be oxidized in part to form an oxide during baking in a production process as described below or during exhaust gas purification.

The amount of the supported platinum component, calculated as metallic platinum, can be 1 to 5 g/L per unit volume of the honeycomb structure. The amount of the palladium component supported on the inorganic oxide is not particularly limited either. The amount of the supported palladium component, calculated as metallic palladium, can be 0.1 to 5 g/L and is preferably 0.5 to 3 g/L per unit volume of the honeycomb structure.

If the amount of the platinum component or palladium component is excessively large, O₂-induced reaction for oxidatively purifying HC and CO which are reductants can be promoted to cause lack of HC and CO required for reductive removal of NOₓ.If the amount of the platinum component or palladium component is excessively small, the action of oxidation of NO into NO₂ is not sufficiently exhibited in some cases.

### (4) Inorganic Oxide

In the present embodiment, the inorganic oxide of the lower layer functions as a support for the platinum component and palladium component. Examples of inorganic oxides which can be used include, but are not limited to, alumina, ceria, zirconia, silica, and silica-alumina. Among these, alumina is preferred.

It is preferable for the platinum component and palladium component to be supported and well-dispersed on alumina, because in this case the platinum component and palladium component tend to more exhibit the function of oxidation of CO and HC. The supporting of the platinum component and palladium component on alumina is preferred also in view of the fact that the platinum component and palladium component tend to be supported in such a manner that particle growth due to movement of the components on the alumina does not occur, at high temperatures.

Examples of the alumina include γ-alumina, δ-alumina, θ-alumina, and α-alumina. The use of γ-alumina, δ-alumina, or θ-alumina except for α-alumina having a smaller surface area is preferred. Among these aluminas, γ-alumina is particularly preferred as a base material on which the platinum component and palladium component are supported, because γ-alumina, although having lower durability at 1000°C or above than the other aluminas, has sufficient heat resistance for use in a catalyst for lean burn which is to be used at 1000°C or below and has the largest surface area among all of the aluminas.

The BET specific surface area of the alumina used is not particularly limited, but is preferably 50 to 250 m²/g and more preferably 100 to 200 m²/g. The use of alumina having such a surface area ensures not only that a large surface area can be maintained at high temperatures but also that platinum and palladium as the precious metal components can be stably maintained in a well-dispersed state.

Lanthanum oxide, ceria, barium, or silica may be added to the alumina in order to maintain a large surface area at high temperatures. When lanthanum oxide is added, the amount of the lanthanum oxide should not be excessive in view of heat resistance.

As previously described, platinum may be used by itself or may be in the form of an alloy with palladium. Such alloying can suppress volatilization of the platinum component at high temperatures in some cases. Platinum may be present on a base material located on the integrally structured support and different from that on which palladium is present. If platinum is present on the same base material as palladium, in some cases part of platinum forms an alloy with palladium, and the two metals forming the alloy cancels their activity so that the activity decreases. When the platinum component and the palladium component are disposed on different base materials respectively, each component can sometimes exhibit the activity proper to its own properties.

The catalyst layer does not particularly need to contain any binder as long as sufficient adhesive strength can be obtained. However, if needed, a binder component may be further added to the catalyst layer. That is because it is considered that if the catalyst layer contains only the components previously described, the bond between the honeycomb structure described later and the catalyst layer or the bond between the catalyst layers is weak in some cases depending on the usage conditions.

As the binder component, various sols such as alumina sol, silica sol, zirconia sol, and titania sol can be used. Soluble salts such as aluminum nitrate, aluminum acetate, zirconium nitrate, and zirconium acetate can also be used.

### 3 Integrally structured Substrate

The integrally structured support (also referred to as "honeycomb structure") used in the present embodiment is a material supporting the catalyst components described above. The integrally structured support has a large number of through holes extending from one end surface to the other end surface, and these through holes together form a honeycomb pattern.

Honeycomb structures are known to be classified into flow-through honeycomb structures and wall-flow honeycomb structures according to the structural characteristics. Wall-flow honeycomb structures are used to filter out solid components such as soot and SOF in exhaust gas and mainly used in diesel particulate filters (DPF). Such a wall-flow honeycomb structure has through holes made of a porous wall with ends alternately closed, and serves the function of a filter that filters out particulate components such as soot.

Flow-through honeycomb structures have a structure having a large number of through holes extending between, and opening at, one opening end surface and the other opening end surface, and are widely used in oxidation catalysts, reduction catalysts, and three-way catalysts (TWC). In the present embodiment, it is desirable to use a flow-through honeycomb structure.

For a honeycomb support such as a flow-through honeycomb structure, its structural characteristics can be expressed by the cell density. As the honeycomb structure used in the present embodiment, a flow-through honeycomb structure having a cell density of 100 to 1500 cell/inch² (155 k to 2325 k/m²) is preferred, and the cell density is more preferably 200 to 900 cell/inch² (310 k to 1400 k/m²). When the cell density is 100 cell/inch² (155 k/m²) or more, a contact area required for purification between exhaust gas and the catalyst can be ensured, and exhaust gas purification performance is likely to be obtained along with high structural strength. When the cell density is 1500 cell/inch² (2325 k/m²) or less, the pressure of exhaust gas from an internal combustion engine is not significantly decreased, so the performance of the internal combustion engine is not impaired and, in addition, a sufficient contact area between the exhaust gas and the catalyst can be ensured. In the catalyst for lean burn according to the present embodiment, the use of a flow-through honeycomb structure having a cell density of 300 to 900 cell/inch² (465 k to 1400 k/m²) is particularly preferably used in order to suppress the pressure loss.

The essential components described above are preferably used in the below-described weights per unit volume of the integrally structured support. The total amount of the supported catalyst composition (the total amount of the applied catalyst composition) is preferably 200 to 570 g/L and more preferably 230 to 540 g/L. If the total amount of the supported catalyst composition is more than 570 g/L per unit volume of the integrally structured support, in some cases a honeycomb structure typically used is clogged in supporting (application) of the catalyst components, so that satisfactory function cannot be obtained. If the total amount of the supported catalyst composition is less than 200 g/L, in some cases the amount of the inorganic oxide is so small that a sufficient amount of catalytic active species to obtain activity cannot be stably dispersed and that required durability cannot be obtained.

The total content of the ceria-based oxides in the catalyst layer, namely the total content of the ceria-based oxides in all of the layers constituting the catalyst, is 70 g/L or more, preferably 110 g/L or more, and more preferably 140 g/L or more per unit volume of the integrally structured support.

### 4 Preparation of Catalyst for Lean Burn

The catalyst for lean burn according to the present embodiment can be produced by providing a catalyst composition slurry containing the catalyst components described above and an integrally structured support and by applying separate layers of the predetermined catalyst components to the integrally structured support. Specifically, the catalyst composition slurry is supported (applied) onto a honeycomb structure by a known wash coating process to produce a honeycomb-structured catalyst.

A NOₓ storage component, platinum supported on an inorganic oxide such as alumina, a proton-substituted β-type zeolite, and a ceria-based oxide supporting rhodium, which are components of the present embodiment, can be produced by known methods.

First, catalyst materials for the lower layer are provided and formed into a slurry.

Production of an inorganic oxide supporting platinum, and if needed, palladium can be accomplished by a known method such as impregnation, ion exchange, or kneading. An example of the production is described below.

As a raw material of a precious metal component, a compound such as a nitric acid salt, sulfuric acid salt, carbonic acid salt, or acetic acid salt of platinum or palladium can be used.

As a raw material of a platinum component, a compound such as a nitric acid salt, sulfuric acid salt, carbonic acid salt, or acetic acid salt of platinum is provided. Specific examples of the raw materials of platinum component include an ethanol amine solution of hydroxyplatinic(IV) acid, tetraammineplatinum(II) acetate, tetraammineplatinum(II) carbonate, tetraammineplatinum(II) nitrate, a nitric acid solution of hydroxyplatinic(IV) acid, platinum nitrate, dinitrodiamine platinum nitrate, and chloroplatinic(IV) acid. Examples of the raw materials of palladium component include tetraamminepalladium(II) acetate, tetraamminepalladium(II) carbonate, tetraamminepalladium(II) nitrate, dinitrodiammine palladium, palladium nitrate, and palladium chloride. Silver and silver salts can also be used.

Any of these materials is dissolved in water or an organic solvent to prepare a solution of a raw material of a precious metal component. Water or a solvent prepared by adding a water-soluble organic solvent to water will be hereinafter referred to as an "aqueous medium".

Next, the solution of the raw material of precious metal component, together with an aqueous medium, is mixed with, for example, a ceria-based oxide of a NOₓ storage component, a Ba component, a Mg component, and an inorganic oxide such as alumina.

The Ba component can be present as barium oxide in the honeycomb-structured catalyst. In production of the catalyst composition slurry, a barium compound can be pulverized, and then the pulverized barium compound can be used by itself or supported on a base material. Barium is preferably added in the form of a soluble salt in order for it to be well dispersed. Examples of the soluble salt include barium carbonate, barium chloride, barium hydroxide, barium acetate, and barium nitrate.

The Mg component can be present as magnesium oxide in the honeycomb-structured catalyst. In production of the catalyst composition slurry, a salt such as magnesium carbonate, magnesium chloride, magnesium acetate, magnesium nitrate, or magnesium sulfate can be used.

For the Ba component and the Mg component, one or more salts for each can be selected from the salts mentioned above. It is preferable that the properties (whether being acidic or alkaline) of the aqueous solutions of the starting salts for the Ba component and Mg components be the same, because in this case finer particles can be obtained on the base material.

If needed, an acid or alkali can be added for pH adjustment. A surfactant or dispersing resin for adjustment of viscosity or for improvement of dispersibility in slurry can also be added.

A method that can be used for mixing to prepare the catalyst base material containing the precious metal component and inorganic oxide is mixing under grinding with a ball mill or other means. Another grinding or mixing technique may be used. The conditions of grinding are preferably controlled so that the catalyst base material will have a particle size of 0.1 to 50 µm. The catalyst base material prepared by such mixing under grinding is applied to a honeycomb structure using a wash coating process described below. If needed, the catalyst base material may be formed into a shape and then processed into a baked catalyst composition by baking at 200 to 650°C. The temperature of baking for obtaining such a baked catalyst composition is preferably 220 to 630°C and more preferably 250 to 600°C. The heating means used can be a known heating means such as an electric furnace or gas furnace.

Other catalyst materials known as a base material, binder, or the like may be added to the catalyst in addition to the essential components described above. Examples of such known catalyst materials include, but are not particularly limited to, titania, zirconia, zeolite, alumina, silica, silica-alumina, alkali metal materials, alkaline-earth metal materials, transition metal materials, and rare-earth metal materials. Also when such known materials are added, a dispersant or a pH adjuster can be used in combination if needed.

In the wash coating process, the catalyst composition is applied to a honeycomb structure and subsequently dried and baked to obtain a honeycomb-structured catalyst having the catalyst composition supported (applied) on the honeycomb structure. The viscosity of the catalyst composition slurry is adjusted to a suitable level for application before use. The viscosity, as measured with a B-type viscometer, is preferably 5 to 2000 mPa·s and more preferably 10 to 1000 mPa·s.

If a catalyst composition slurry having a viscosity more than 2000 mPa·s is to be supported (applied) onto a honeycomb structure by a wash coating process, sometimes the high viscosity leads to failure to coat the entire interior of the honeycomb structure. In order to decrease the viscosity of such a highly viscous slurry, it is necessary to increase the water content of the slurry. However, with the use of the slurry with an increased water content, the amount of the catalyst to be supported per wash coating is small, and thus wash coating needs to be repeated several times to support a necessary amount of catalyst for forming one catalyst composition layer. Repeating wash coating several times is not preferred in terms of production efficiency.

Next, materials for the upper layer are provided. A ceria-based oxide supporting rhodium can be produced by providing a compound such as a nitric acid salt, sulfuric acid salt, carbonic acid salt, or acetic acid salt of rhodium and by supporting the compound onto cerium oxide as the ceria-based oxide using a known method such as impregnation, ion exchange, or kneading. Specific examples of the raw material of rhodium component include rhodium sulfate, rhodium acetate, rhodium nitrate, and rhodium chloride. A palladium component can also be supported onto the cerium oxide as the ceria-based oxide by using a known method such as impregnation, ion exchange, or kneading. The same applies to the case of using a ceria-based oxide supporting palladium.

A proton-substituted β-type zeolite is mixed with the ceria-based oxide and, if needed, an acid or alkali for pH adjustment and a surfactant, dispersing resin, or the like for adjustment of viscosity or for improvement of dispersibility in slurry are added. As in the foregoing case, a method that can be used for mixing is mixing under grinding with a ball mill or other means. Another grinding or mixing technique may be used. The conditions of grinding are preferably controlled so that the catalyst base material will have a particle size of 0.1 to 50 µm. Finally, the mixture as the catalyst base material is formed, if necessary, into a shape and then baked at 200 to 650°C to obtain a catalyst composition. The baking temperature is preferably 220 to 630°C and more preferably 250 to 600°C.

When several catalyst layers are to be supported, the wash coating process can be repeated two or more times. The application step prior to the drying step may be repeated two or more times, and all the steps prior to the drying step may be repeated two or more times.

### 5 Exhaust Gas Purification Method

The catalyst for lean burn according to the present embodiment can be used by being placed in exhaust gas flow, for example, in an automobile. In the exhaust gas flow, the catalyst for lean burn may be placed alone, a plurality of the catalysts for lean burn may be placed, or the catalyst for lean burn may be used in combination with another catalyst having a different action.

When a plurality of catalysts are used, the catalysts may be arranged adjacent to each other and may, for example, be placed both directly below the engine and below the chassis floor. In this case, the catalyst for lean burn according to the present embodiment may be used either directly below the engine or below the chassis floor or both directly below the engine and below the chassis floor.

In the catalyst for lean burn according to the present embodiment, as shown in Figure 1, the upper layer contains a proton-substituted β-type zeolite and a ceria-based oxide supporting rhodium, and the lower layer contains a NOₓ storage component and platinum and palladium supported on an inorganic oxide (base material). The upper layer further contains palladium supported on a ceria-based oxide.

Thus, when the catalyst for lean burn according to the present embodiment is used for purification of diesel engine exhaust gas and exposed to a lean environment (where the amount of oxygen is larger than a theoretical amount of oxygen relative to the injected fuel) discharged by lean burn, as shown in Figure 1, CO is oxidized into CO₂ by contact with palladium supported on the ceria-based oxide in the upper layer and, in the lower layer, palladium and platinum oxidize CO while the NOₓ storage component stores NOₓ.

The fuel supply is then carried out by excessive fuel injection so as to create a rich environment (environment where the fuel is excessive). A low-oxygen-concentration environment is thus transiently created, in which the stored NOₓ is desorbed, contacts with the rhodium component of the upper layer, and is reduced by the fuel (HC) adsorbed on the proton-substituted β-type zeolite. The means for such fuel supply is not particularly limited, and sometimes the fuel supply is carried out by pulsed injection.

The proton-substituted β-type zeolite of the upper layer exhibits its performance very stably even at high temperatures, and the NOₓ storage component such as Ba of the lower layer stores NOₓ under lean conditions and releases NO₂ under rich conditions. Thus, both the proton-substituted β-type zeolite and NOₓ storage component serve as key active species in denitration.

### Examples

Hereinafter, the features of the present invention will be described in further detail by using Examples of the present invention and Comparative Examples. The present invention should not be construed as being limited to these Examples. That is, the materials, the amounts and proportions of the materials, the details of the process steps, the order of the process steps, and the like can be changed as appropriate within the constraints of the appended claims.

The various values specified in the following Examples for production conditions and evaluation results have meaning as preferred upper limits or preferred lower limits in embodiments of the present invention, and a preferred range may be defined by a combination of an upper or lower limit previously described and a value specified in one of the following Examples or values specified in different Examples. Measurement of oxidation performance (light-off) and evaluation of NOₓ storage were conducted in the following manners.

### <Method of Measurement of Oxidation Performance (Light-Off)>

A catalyst prepared was cut with a diamond cutter into a size (25.4 mm diameter × 50 mm length) for model gas evaluation, and the cut piece of the catalyst was then heat-treated with an electric furnace at 800°C for 6 hours, after which the heat-treated catalyst was subjected to a light-off test using a model gas evaluation system under the following conditions.

The catalyst for model gas evaluation was attached to a holder of the model gas evaluation system, the temperature of which was then increased from room temperature to 400°C at a rate of 30°C/min while gas components listed in Table 5 were allowed to flow at a GHSV (gas hourly space velocity, corresponding to the inflow rate of the reactant gases per unit volume of the catalyst) of 50,000/hr. During this process, the catalyst inlet gas temperature of the catalyst was measured when the oxidation ratio of CO and the oxidation ratio of HC reached certain levels. "COT50" refers to the catalyst bed temperature of the catalyst at the time when 50% of CO had been oxidized, and "HCT50" refers to the catalyst bed temperature of the catalyst at the time when 50% of HC had been oxidized.

### <Evaluation of NOₓ Storage>

A catalyst prepared was cut with a diamond cutter into a size (25.4 mm diameter × 50 mm length) for model gas evaluation, and the cut piece of the catalyst was then heat-treated with an electric furnace at 750°C for 52 hours, after which the heat-treated catalyst was subjected to a NOₓ storage test using a model gas evaluation system under the following conditions.

The catalyst for model gas evaluation was attached to a holder of the model gas evaluation system, and then evaluation was made by allowing gas components listed in Table 6 to flow at a GHSV (gas hourly space velocity, corresponding to the inflow rate of the reactant gases per unit volume of the catalyst) of 72,000/hr.

The gas temperature was increased to 200°C under a nitrogen stream, and the gas <1> listed in Table 6 was allowed to flow for 2 minutes, after which the flowing gas was switched to the gas <2> listed in Table 6, and the gas <2> was allowed to flow for 10 minutes. During this process, the amount of NOₓ discharged was analyzed. The difference between the amount of NOₓ introduced and the amount of NOₓ discharged in the period to the time point of 120 seconds after switching to the gas <2> was defined as the amount of NOₓ stored in the catalyst, and the amount of NOₓ stored in the catalyst at 200°C was calculated by the following equation (2).[NOx storage capacity (%)] = {[Amount of NOx gas introduced (cumulative amount in the period to the time point of 120 seconds after switching to the gas <2>)] - [Amount of NOx discharged (cumulative amount in the period to the time point of 120 seconds after switching to the gas <2>)]} ÷ [Amount of introduced NOx gas (cumulative amount in the period to the time point of 120 seconds after switching to the gas <2>)]

Thereafter, the flowing gas was switched to the gas <1> listed in Table 6, and the gas <1> was allowed to flow for 2 minutes, after which the temperature was increased to 250°C. After the temperature was stabilized, the flowing gas was switched to the gas <2> listed in Table 6, and the gas <2> was allowed to flow for 10 minutes. The NOₓ storage capacity in the period to the time point of 120 seconds after switching to the gas <2> was evaluated in the same manner as above. Hereinafter, The NOₓ storage capacity was measured also for gas temperatures of 300°C, 350°C, 400°C, and 450°C by the same procedures.

### (Example 1)

### =Lower layer=

An aqueous platinum chloride solution and a palladium nitrate solution as raw materials of the precious metal component were supported by impregnation onto a γ-alumina powder (BET value: 140 m²/g) as a base material, and thus a platinum-palladium-supporting alumina powder (content of platinum calculated as metallic platinum: 3.4 wt%, content of palladium calculated as metallic palladium: 1.1 wt%) was obtained. Predetermined amounts of a cerium oxide powder (BET = 150 m²/g), barium acetate, and the platinum-palladium-supporting alumina powder were weighed and then added to stirred water, and the mixture was milled by wet milling to obtain a slurry.

Using a wash coating process, this slurry was supported (applied) to a predetermined amount on a honeycomb flow-through cordierite support (cell density: 400 cell/inch² (about 620 k/m²), wall thickness: 4.5 mil (about 0.14 mm), cell shape: hexagonal, length: 76.2 mm, diameter: 25.4 mm), and the slurry was dried at 200°C for 30 minutes and then baked under air at 500°C for 1 hour.

### =Upper Layer=

A rhodium nitrate solution as a raw material of the precious metal component was supported by impregnation onto a cerium oxide powder (BET = 150 m²/g) as a base material, and thus a rhodium-supporting cerium oxide powder (content of rhodium calculated as metallic rhodium: 3.0 wt%) was obtained. Likewise, a palladium nitrate solution as a raw material of the precious metal component was supported by impregnation onto a cerium oxide powder (BET = 150 m²/g) as a base material, and thus a palladium-supporting cerium oxide powder (content of palladium calculated as metallic palladium: 0.9 wt%) was obtained. Predetermined amounts of a proton-substituted β-type zeolite (H-BEA-type zeolite, BET value: 700 m²/g, SAR: 25), the palladium-supporting cerium oxide powder, and the rhodium-supporting cerium oxide powder were mixed with stirred water, and the mixture was milled by wet milling to obtain a slurry.

Using a wash coating process, this slurry was supported (applied) to a predetermined amount (H-BEA-type zeolite: 40 g/L) on the honeycomb flow-through cordierite support on which the lower layer was supported. The slurry was dried at 200°C for 30 minutes and then baked under air at 500°C for 1 hour.

The composition of the catalyst thus obtained is shown in Table 1. The values listed in Table 1 correspond to the amounts (g/L) of the supported catalysts per unit volume of the honeycomb flow-through cordierite support, and the values for the precious metals (platinum, palladium, and rhodium) correspond to the weights of the precious metal components calculated as metals.

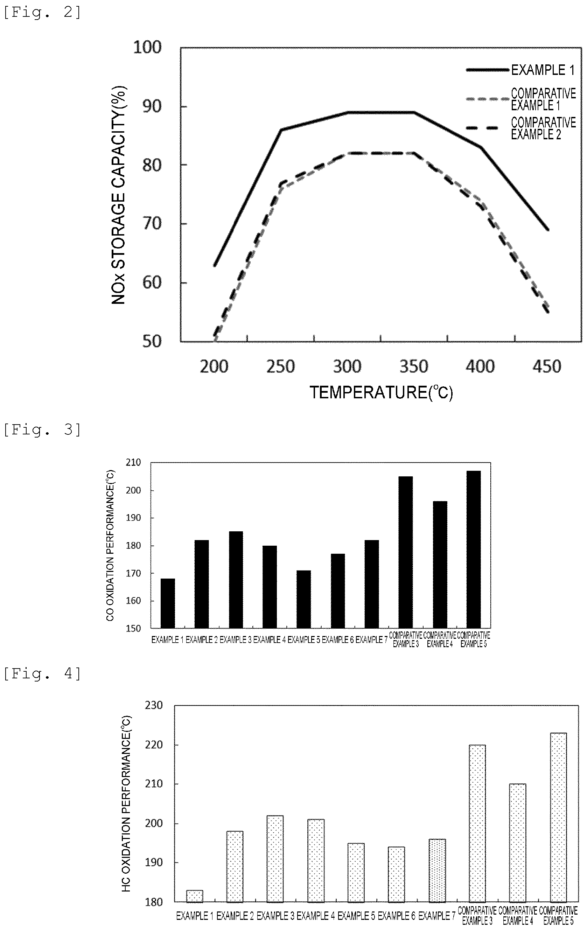

Next, the obtained catalyst was processed into a catalyst for model gas evaluation in a manner as described above, and the catalyst was then heat-treated with an electric furnace at 800°C for 6 hours, after which the heat-treated catalyst was subjected to a light-off test using a model gas evaluation system under the conditions described above. The results of the oxidation performance (light-off) test of this catalyst are shown in Table 4 and Figures 3 and 4.

Additionally, the catalyst as obtained above was cut into a catalyst for model gas evaluation, and the catalyst was then heat-treated with an electric furnace at 750°C for 52 hours, after which the heat-treated catalyst was subjected to a NOₓ storage test using a model gas evaluation system under the conditions described above. The results of the NOₓ storage capacity measurement of the catalyst are shown in Table 2 and Figure 2.

**[Table 1]**

| | | Precious metal components [g/L] | | | Catalyst components (exclusive of precious metals) [g/L] | | | | | |
|---|---|---|---|---|---|---|---|---|---|---|
| | | | | | RhCeO₂ | Zeolite (Type) | Pt/PdAl₂O₃ | PdCeO₂ | CeO₂ | BaO |
| | | Pt | Pd | Rh | | | | | | |
| Example 1 | Upper layer | | 0.6 | 0.6 | 20 | 40(BEA) | | 70 | | |
| | Lower layer | 3.6 | 1.2 | | | | 105 | | 125 | 45 |
| Comparative Example 1 | Upper layer | | 0.6 | 0.6 | 20 | 40(MFI) | | 70 | | |
| | Lower layer | 3.6 | 1.2 | | | | 105 | | 125 | 45 |
| Comparative Example 2 | Upper layer | | 0.6 | 0.6 | 20 | 40(CHA) | | 70 | | |
| | Lower layer | 3.6 | 1.2 | | | | 105 | | 125 | 45 |

**[Table 2]**

| | NOₓ storage capacity (%) | | | | | |
|---|---|---|---|---|---|---|
| Temperature (°C) | 200 | 250 | 300 | 350 | 400 | 450 |
| Example 1 | 63 | 86 | 89 | 89 | 83 | 69 |
| Comparative Example 1 | 50 | 76 | 82 | 82 | 74 | 56 |
| Comparative Example 2 | 51 | 77 | 82 | 82 | 73 | 55 |

**[Table 3]**

| | | Precious metal components [g/L] | | | Catalyst components (exclusive of precious metals) [g/L] | | | | | | | |
|---|---|---|---|---|---|---|---|---|---|---|---|---|
| | | | | | Pt/Pd Al₂O₃ | Rh CeO₂ | Zeolite | Pt/Pd Al₂O₃ | Pd CeO₂ | CeO₂ | BaO | MgO |
| | | Pt | Pd | Rh | | | | | | | | |
| Example 1 | Upper layer | | 0.6 | 0.6 | | 20 | 40 | | 70 | | | |
| | Lower layer | 3.6 | 1.2 | | | | | 105 | | 125 | 45 | |
| Example 2 | Upper layer | | 0.6 | 0.6 | | 20 | 20 | | 70 | | | |
| | Lower layer | 3.6 | 1.2 | | | | | 105 | | 125 | 45 | |
| Reference Example 3 | Upper layer | | 0.6 | 0.6 | | 20 | 10 | | 70 | | | |
| | Lower layer | 3.6 | 1.2 | | | | | 105 | | 125 | 45 | |
| Example 4 | Upper layer | | 0.6 | 0.6 | | 50 | 40 | | 70 | | | |
| | Lower layer | 3.6 | 1.2 | | | | | 100 | | 100 | 45 | |
| Example 5 | Upper layer | 1.4 | 0.6 | 0.6 | 40 | 50 | 40 | | | | | |
| | Lower layer | 2.2 | 1.2 | | | | | 80 | 135 | | 45 | 15 |
| Example 6 | Upper layer | | | 0.6 | | 50 | 40 | | | | | |
| | Lower layer | 3.6 | 1.8 | | | | | 144 | 90 | | 40 | |
| Example 7 | Upper layer | | | 0.6 | 50 | 40 | | | | | | |
| | Lower layer | 3.6 | 1.8 | | | | | 100 | 170 | | 45 | |
| Comparative Example 3 | Upper layer | 1.4 | 0.6 | 0.6 | 40 | 50 | | | | | | |
| | Lower layer | 2.2 | 1.2 | | | | 15 | 80 | 135 | | 45 | 15 |
| Comparative Example 4 | Upper layer | 1.4 | 0.6 | 0.6 | 40 | 50 | | | | | | |
| | Lower layer | 2.2 | 1.2 | | | | 40 | 80 | 135 | | 45 | 15 |
| Comparative Example 5 | Upper layer | 1.4 | 0.6 | 0.6 | 40 | 50 | | | | | | |
| | Lower layer | 2.2 | 1.2 | | | | | 80 | 135 | | 45 | 15 |

**[Table 4]**

| | Oxidation performance (°C) | |
|---|---|---|
| | CO | HC |
| | T50 | T50 |
| Example 1 | 168 | 183 |
| Example 2 | 182 | 198 |
| Reference Example 3 | 185 | 202 |
| Example 4 | 177 | 194 |
| Example 5 | 180 | 201 |
| Example 6 | 171 | 195 |
| Example 7 | 182 | 196 |
| Comparative Example 3 | 205 | 220 |
| Comparative Example 4 | 196 | 210 |
| Comparative Example 5 | 207 | 223 |

**[Table 5]**

| | | |
|---|---|---|
| Flow rate | | 20 L/min |
| SV | | 50,000/hr |
| Reactant gas concentration | CO | 800 ppm |
| | CO₂ | 4.5% |
| | C₃H₆ | 400 ppmC |
| | O₂ | 10% |
| | NO | 2000 ppm |
| | H₂O | 10% |
| | N₂ | Balance |

**[Table 6]**

| | Gas <1> | Gas <2> |
|---|---|---|
| NO | 200 ppm | 200 ppm |
| C₃H₆ | 3000 ppmC | 0 ppm |
| CO | 1% | 1500 ppm |
| CO₂ | 6% | 6% |
| O₂ | 0.5% | 10% |
| H₂O | 5% | 5% |
| N₂ | Balance | Balance |

### (Comparative Example 1)

A catalyst of Comparative Example 1 was obtained in the same manner as the catalyst of Example 1, except that a MFI-type zeolite was used instead of the proton-substituted β-type zeolite. The composition of this catalyst is shown in Table 1, and the results of the NOₓ storage capacity measurement of the catalyst are shown in Table 2 and Figure 2.

### (Comparative Example 2)

A catalyst of Comparative Example 2 was obtained in the same manner as the catalyst of Example 1, except that a CHA-type zeolite was used instead of the proton-substituted β-type zeolite. The composition of this catalyst is shown in Table 1, and the results of the NOₓ storage capacity measurement of the catalyst are shown in Table 2 and Figure 2.

### (Example 2)

A catalyst of Example 2 was obtained in the same manner as the catalyst of Example 1, except that the amount of the supported proton-substituted β-type zeolite was changed to 20 g/L. The composition of this catalyst is shown in Table 3, and the results of the oxidation performance (light-off) test of the catalyst are shown in Table 4 and Figures 3 and 4.

### (Reference Example 3 useful to understand that invention)

A catalyst of Reference Example 3 was obtained in the same manner as the catalyst of Example 1, except that the amount of the supported proton-substituted β-type zeolite was changed to 10 g/L. The composition of this catalyst is shown in Table 3, and the results of the oxidation performance (light-off) test of the catalyst are shown in Table 4 and Figures 3 and 4.

### (Example 4)

A catalyst of Example 4 was obtained in the same manner as the catalyst of Example 1, except that in the lower layer, the amount of the platinum-palladium-supporting alumina powder supported was 100 g/L, with the content of platinum calculated as metallic platinum being 3.6 wt% and the content of palladium calculated as metallic palladium being 1.2 wt%, and the amount of the cerium oxide supported was 100 g/L, and that in the upper layer, the amount of the rhodium-supporting cerium oxide powder supported was 50 g/L, with the content of rhodium being 1.2 wt%. The composition of this catalyst is shown in Table 3, and the results of the oxidation performance (light-off) test of the catalyst are shown in Table 4 and Figures 3 and 4.

### (Example 5)

### =Lower Layer=

An aqueous platinum chloride solution and a palladium nitrate solution as raw materials of the precious metal component were supported by impregnation onto a γ-alumina powder (BET value: 140 m²/g) as a base material, and thus a platinum-palladium-supporting alumina powder (content of platinum calculated as metallic platinum: 2.8 wt%, content of palladium calculated as metallic palladium: 0.8 wt%) was obtained. Likewise, a palladium nitrate solution as a raw material of the precious metal component was supported by impregnation onto a cerium oxide powder (BET = 150 m²/g) as a base material, and thus a palladium-supporting cerium oxide powder (content of palladium calculated as metallic palladium: 0.4 wt%) was obtained. Predetermined amounts of barium acetate, magnesium oxide, the platinum-palladium-supporting alumina powder, and the palladium-supporting cerium oxide powder were weighed and then added to stirred water, and the mixture was milled by wet milling to obtain a slurry. Coating with this slurry was performed as in Example 1, followed by baking.

The amounts of the supported components were as follows: platinum-palladium-supporting alumina powder: 80 g/L, cerium oxide powder: 135 g/L, BaO: 45 g/L, and MgO: 15 g/L.

### =Upper Layer=

A rhodium nitrate solution as a raw material of the precious metal component was supported by impregnation onto a cerium oxide powder (BET = 150 m²/g) as a base material, and thus a rhodium-supporting cerium oxide powder (content of rhodium calculated as metallic rhodium: 1.2 wt%) was obtained. Likewise, an aqueous platinum chloride solution and a palladium nitrate solution as raw materials of the precious metal component were supported by impregnation onto a γ-alumina powder (BET value: 140 m²/g) as a base material, and thus a platinum-palladium-supporting alumina powder (content of platinum calculated as metallic platinum: 3.5 wt%, content of palladium calculated as metallic palladium: 1.5 wt%) was obtained. Predetermined amounts of a proton-substituted β-type zeolite (BET value: 700 m²/g, SAR: 25), the rhodium-supporting cerium oxide powder, and the platinum-palladium-supporting alumina powder were mixed with stirred water, and the mixture was milled by wet milling to obtain a slurry. This slurry was baked as in Example 1.

The amounts of the supported components were as follows: platinum-palladium-supporting alumina powder: 40 g/L, rhodium-supporting cerium oxide powder: 50 g/L, and zeolite: 40 g/L.

The composition of this catalyst is shown in Table 3, and the results of the oxidation performance (light-off) test of the catalyst are shown in Table 4 and Figures 3 and 4.

### (Example 6)

A catalyst of Example 6 was obtained in the same manner as the catalyst of Example 5, except that in the lower layer, the amount of the palladium-supporting cerium oxide powder supported was 90 g/L, with the content of palladium calculated as metallic palladium being 0.7 wt%, and the amount of the platinum-palladium-supporting alumina powder supported was 144 g/L, with the content of platinum calculated as metallic platinum being 2.5 wt% and the content of palladium calculated as metallic palladium being 0.8 wt%, and that in preparation of the slurry for the upper layer, any platinum-palladium-supporting alumina powder was not used.

The composition of this catalyst is shown in Table 3, and the results of the oxidation performance (light-off) test of the catalyst are shown in Table 4 and Figures 3 and 4.

### (Example 7)

A catalyst of Example 7 was obtained in the same manner as the catalyst of Example 5, except that in the lower layer, the amount of the platinum-palladium-supporting alumina powder supported was 100 g/L, with the content of platinum calculated as metallic platinum being 3.6 wt% and the content of palladium calculated as metallic palladium being 1.2 wt%, and the amount of the palladium-supporting cerium oxide powder supported was 170 g/L, with the content of palladium calculated as metallic palladium being 0.4 wt%.

The composition of this catalyst is shown in Table 3, and the results of the oxidation performance (light-off) test of the catalyst are shown in Table 4 and Figures 3 and 4.

### (Comparative Example 3)

A catalyst of Comparative Example 3 was obtained in the same manner as the catalyst of Example 5, except that in preparation of the slurry for the upper layer, any proton-substituted β-type zeolite was not used, and that in preparation of the slurry for the lower layer, a proton-substituted β-type zeolite was added so that the amount of the supported zeolite was 15 g/L. The composition of this catalyst is shown in Table 3, and the results of the oxidation performance (light-off) test of the catalyst are shown in Table 4 and Figures 3 and 4.

### (Comparative Example 4)

A catalyst of Comparative Example 4 was obtained in the same manner as the catalyst of Example 5, except that in preparation of the slurry for the upper layer, any proton-substituted β-type zeolite was not used, and that in preparation of the slurry for the lower layer, a proton-substituted β-type zeolite was added so that the amount of the supported zeolite was 40 g/L. The composition of this catalyst is shown in Table 3, and the results of the oxidation performance (light-off) test of the catalyst are shown in Table 4 and Figures 3 and 4.

### (Comparative Example 5)

A catalyst of Comparative Example 5 was obtained in the same manner as the catalyst of Example 4, except that in preparation of the slurry for the upper layer, any proton-substituted β-type zeolite was not used. The composition of this catalyst is shown in Table 3, and the results of the oxidation performance (light-off) test of the catalyst are shown in Table 4 and Figures 3 and 4.

### [Evaluation]

As a result of the foregoing, as is clear from Figure 2, Example 1 of the present invention exhibited a high NOₓ storage capacity over a wide temperature range from 200 to 450°C by virtue of the use of BEA zeolite in the upper layer.

By contrast, the NOₓ storage capacity of Comparative Examples 1 and 2 was low because the zeolite used was of MFI type or CHA type.

As is clear from Figures 3 and 4, the CO oxidation performance and HC oxidation performance of Example 2 and Reference Example 3 were lower than those of Example 1 because of the reduction in the amount of the BEA zeolite in the upper layer, but were at levels acceptable for practical use. The CO oxidation performance and HC oxidation performance of Example 6 were lower than those of Example 1 because of the reduction in the amounts of CeO₂ and the platinum-palladium-supporting alumina in the lower layer, but were at levels acceptable for practical use. Similar results were obtained for Examples 5, 6, and 7 where the layer configuration was changed from that of Example 1 within the intended scope of the present invention, such as by placing a platinum-palladium-supporting alumina or palladium-supporting CeO₂.

By contrast, the NOₓ storage capacity of Comparative Examples 1 and 2 was low because the zeolite used was of MFI type or CHA type. For Comparative Examples 3 and 4 where BEA zeolite was contained in the lower layer and Comparative Example 5 where no zeolite was contained, both the CO oxidation performance and HC oxidation performance were significantly lower than those of Example 1.

These results demonstrate that the catalyst of the present invention exhibits excellent performance in removal of NOₓ, CO, and HC discharged at high temperatures from a diesel vehicle employing light oil as a fuel.

### Industrial Applicability

The catalyst for lean burn according to the present invention can be used for purification of NOₓ-containing exhaust gas discharged from a combustion engine using a fossil fuel, such as a diesel engine, gasoline engine, or gas turbine.

## Claims

1. A catalyst for a lean-burn engine to purify exhaust gas, the catalyst comprising: an integrally structured support; and a catalyst layer containing a precious metal element including rhodium, palladium and platinum, provided on the integrally structured support and having at least two layers that include an upper layer and a lower layer; wherein
the upper layer of the catalyst layer contains at least a proton-substituted β-type zeolite and a ceria-based oxide supporting rhodium, and
the lower layer of the catalyst layer contains at least a NOₓ storage component and platinum supported on an inorganic oxide,
a total content of ceria-based oxides in the catalyst layer is a total of 70 g/L or more per unit volume of the integrally structured support,
the NOₓ storage component in the lower layer contains an alkaline-earth metal compound and a ceria-based oxide, wherein a ceria of the ceria-based oxide has a BET specific surface area of 50 to 250 m²/g, as measured by a BET method,
the content of the proton-substituted β-type zeolite is 20 to 70 g/L, per unit volume of the integrally structured support,
a content of the rhodium, in terms of metallic rhodium, is 0.1 to 2.0 g/L per unit volume of the integrally structured support,
a content of the platinum, in terms of metallic platinum, is 1.0 to 8.0 g/L per unit volume of the integrally structured support, and
a ratio between the rhodium and the palladium in the catalyst layer, expressed by a weight ratio between the rhodium and the palladium calculated as metals, is 1:3 to 1:20.

2. The catalyst for a lean-burn engine according to claim 1, wherein the NOₓ storage component contains BaO and CeO₂.

3. The catalyst for a lean-burn engine according to claim 1 or 2, wherein the inorganic oxide of the lower layer contains alumina.

4. The catalyst for a lean-burn engine according to claim 3, wherein the lower layer contains platinum and palladium.

5. The catalyst for a lean-burn engine according to any one of claims 1 to 4, wherein
the NOₓ storage component in the lower layer contains an alkaline-earth metal compound and a ceria-based oxide, wherein the ceria-based oxide is contained at a rate of 50 to 200 g/L per unit volume of the integrally structured support.

## Patentansprüche

1. Katalysator für einen Magerverbrennungsmotor zum Reinigen von Abgas, wobei der Katalysator umfasst: einen integral strukturierten Träger; und eine Katalysatorschicht, die ein Edelmetallelement einschließlich Rhodium, Palladium und Platin enthält, die auf dem integral strukturierten Träger bereitgestellt ist und mindestens zwei Schichten aufweist, die eine obere Schicht und eine untere Schicht umfassen; wobei
die obere Schicht der Katalysatorschicht mindestens einen Protonen-substituierten Zeolith vom β-Typ und ein Oxid auf Ceroxidbasis, das Rhodium trägt, enthält, und
die untere Schicht der Katalysatorschicht mindestens eine NOx-Speicherkomponente und Platin geträgert auf einem anorganischen Oxid enthält,
ein Gesamtgehalt an Oxiden auf Ceroxidbasis in der Katalysatorschicht insgesamt 70 g/L oder mehr pro Volumeneinheit des integral strukturierten Trägers beträgt,
die NOx-Speicherkomponente in der unteren Schicht eine Erdalkalimetallverbindung und ein Oxid auf Ceroxidbasis enthält, wobei ein Ceroxid des Oxids auf Ceroxidbasis eine spezifische BET-Oberfläche von 50 bis 250 m²/g, gemessen nach einem BET-Verfahren, aufweist,
ein Gehalt des Protonen-substituierten Zeoliths vom β-Typ 20 bis 70 g/L pro Volumeneinheit des integral strukturierten Trägers beträgt,
ein Gehalt an Rhodium, bezogen auf metallisches Rhodium, 0,1 bis 2,0 g/L pro Volumeneinheit des integral strukturierten Trägers beträgt,
ein Gehalt an Platin, bezogen auf metallisches Platin, 1,0 bis 8,0 g/L pro Volumeneinheit des integral strukturierten Trägers beträgt und
ein Verhältnis zwischen dem Rhodium und dem Palladium in der Katalysatorschicht, ausgedrückt durch ein Gewichtsverhältnis zwischen dem Rhodium und dem Palladium, berechnet als Metalle, 1:3 bis 1:20 beträgt.

2. Katalysator für einen Magerverbrennungsmotor nach Anspruch 1, wobei
die NOx-Speicherkomponente BaO und CeO₂ enthält.

3. Katalysator für einen Magerverbrennungsmotor nach Anspruch 1 oder 2, wobei
das anorganische Oxid der unteren Schicht Aluminiumoxid enthält.

4. Katalysator für einen Magerverbrennungsmotor nach Anspruch 3, wobei
die untere Schicht Platin und Palladium enthält.

5. Katalysator für einen Magerverbrennungsmotor nach einem der Ansprüche 1 bis 4, wobei
die NOx-Speicherkomponente in der unteren Schicht eine Erdalkalimetallverbindung und ein Oxid auf Ceroxidbasis enthält, wobei das Oxid auf Ceroxidbasis in einer Menge von 50 bis 200 g/L pro Volumeneinheit des integral strukturierten Trägers enthalten ist.

## Revendications

1. Catalyseur pour moteur à mélange pauvre pour purifier un gaz échappement, le catalyseur comprenant : un support intégralement structuré ; et une couche de catalyseur contenant un élément de métal précieux comprenant du rhodium, du palladium et du platine, fournie sur le support intégralement structuré et ayant au moins deux couches qui comprennent une couche supérieure et une couche inférieure ;
la couche supérieure de la couche de catalyseur contenant au moins une zéolithe de type β substituée par proton et un oxyde à base d'oxyde de cérium supportant du rhodium, et
la couche inférieure de la couche de catalyseur contenant au moins un composant de stockage de NOₓ et du platine supporté sur un oxyde inorganique,
une teneur totale d'oxydes à base d'oxyde de cérium dans la couche de catalyseur étant un total de 70 g/L ou plus par unité de volume du support intégralement structuré,
le composant de stockage de NOₓ dans la couche inférieure contenant un composé de métal alcalino-terreux et un oxyde à base d'oxyde de cérium, un oxyde de cérium de l'oxyde à base d'oxyde de cérium ayant une superficie spécifique BET de 50 à 250 m²/g, comme mesurée par un procédé BET,
la teneur de la zéolithe de type β substituée par proton étant de 20 à 70 g/L, par unité de volume du support intégralement structuré,
une teneur du rhodium, en termes de rhodium métallique, étant de 0,1 à 2,0 g/L par unité de volume du support intégralement structuré,
une teneur du platine, en termes de platine métallique, étant de 1,0 à 8,0 g/L par unité de volume du support intégralement structuré,
un rapport entre le rhodium et le palladium dans la couche de catalyseur, exprimé par un rapport en poids entre le rhodium et le palladium calculés comme métaux, étant de 1:3 à 1:20.

2. Catalyseur pour moteur à mélange pauvre selon la revendication 1, le composant de stockage de NOₓ contenant BaO et CeO₂.

3. Catalyseur pour moteur à mélange pauvre selon la revendication 1 ou 2, l'oxyde inorganique de la couche inférieure contenant de l'alumine.

4. Catalyseur pour moteur à mélange pauvre selon la revendication 3, la couche inférieure contenant du platine et du palladium.

5. Catalyseur pour moteur à mélange pauvre selon l'une quelconque des revendications 1 à 4,
le composant de stockage de NOₓ dans la couche inférieure contenant un composé de métal alcalino-terreux et un oxyde à base d'oxyde de cérium, l'oxyde à base d'oxyde de cérium étant contenu à raison d'un taux de 50 à 200 g/L par unité de volume du support intégralement structuré.
